# EUROPEAN PATENT SPECIFICATION

(11) **EP 0 520 912 B1**
(45) Date of publication and mention of the grant of the patent: **05.03.1997**
(21) Application number: 92401827.8
(22) Date of filing: 26.06.1992
(51) Int. Cl.: G03B 9/02

(54) **Iris drive mechanism**
Antriebsmechanismus für eine Irisblende
Mécanisme de commande d'un diaphragme-iris

(30) Priority: 28.06.1991 JP 159087/91
(43) Date of publication of application: 30.12.1992
(73) Proprietor: SONY CORPORATION, Tokyo (JP)
(72) Inventor: Moro, Shuuji, Shinagawa-ku, Tokyo (JP); Tada, Kanehiro, Shinagawa-ku, Tokyo (JP); Nishida, Yasuo, Shinagawa-ku, Tokyo (JP); Ohshima, Eiji, Shinagawa-ku, Tokyo (JP)
(74) Representative: Thévenet, Jean-Bruno

(56) References cited:
- JP-A- 3 144 546
- US-A- 4 797 700
- US-A- 4 884 091
- PATENT ABSTRACTS OF JAPAN, unexamined applications, field P, vol. 12, no. 226, June 28, 1988 THE PATENT OFFICE JAPANESE GOVERNMENT page 59 P 722

## Description

### BACKGROUND OF THE INVENTION

### Field of the Invention

The present invention relates to an iris drive mechanism which is suitably assembled into a lens block.

### Description of the Prior Art

In an iris for adjusting exposure, two diaphragms are operated by an ideal gyrator (IG) meter (motor) and the moving distances of these diaphragms are substantially proportional to a rotational angle of the IG meter.

Accordingly, even though the aperture is small and the rotational angle of the IG meter is small, the diaphragms are moved by the distances equal to those when the aperture is large, which considerably changes the F-number.

As a consequence, resolution of the F-number when the aperture is small is lowered and an automatic exposure (AE) control performance is deteriorated.

US-A-4 884 091 describes iris drive mechanisms designed to enable the diaphragm blades defining the aperture to move with little resistance. One of the described mechanisms has a link portion consisting of two levers for controlling displacement of the diaphragm blades. A first one of the levers is pivoted at its midpoint and has pins at its ends which engage in holes in the diaphragm blades. The second of the levers is mounted at one end on a motor drive shaft and has a driving pin at its other end engaging a long curved slot in the first lever, that slot being between the pivot point of the first lever and one of the pins driving a diaphragm blade. As the motor drive shaft rotates, the driving pin travels along the long curved slot in the first lever from a position near the end of the first lever to a position close to the pivot point of the first lever.

### OBJECTS AND SUMMARY OF THE INVENTION

Therefore, it is an object of the present invention to provide an improved iris drive mechanism in which the aforesaid shortcomings and disadvantages encountered with the prior art can be eliminated.

More specifically, it is an object of the present invention to provide an iris drive mechanism in which a resolution of F-number is high even in a small aperture.

Another object of the present invention is to provide an iris drive mechanism in which an automatic exposure (AE) control performance can be improved.

Still another object of the present invention is to provide an iris drive mechanism in which a space of a lens can be effectively utilized even when the lens is miniaturized.

The present invention provides an iris drive mechanism having first and second diaphragm blades which are slideable in first and second opposed directions and define therebetween an aperture, and comprising: a housing; a first lever which is pivotally supported on the housing so as to be pivotal about a first axis which passes through substantially the midpoint of said first lever; first and second pins which are mounted on said first lever proximate the first and second ends of said first lever respectively, and at substantially equal distances from the first axis, said first and second pins being received in respective openings formed in said first and second diaphragm blades; an elongate opening formed in said first lever; a motor having a drive shaft; and a second lever which is mounted on and rotates with said drive shaft, said second lever being relatively short compared with the first lever and having a third pin which is received in said elongate opening of said first lever; characterized in that the elongate opening formed in said first lever is located between said first pin and said first end of the first lever so that, in use, the first and second levers co-operate to displace the first and second diaphragm blades: a) relatively slowly at a first a variable rate of displacement relative to the angular rotation of the second lever, through an initial stage wherein the aperture defined by said first and second diaphragm blades changes from a minimal opening degree to a first predetermined opening degree; b) relatively quickly at a second variable rate of displacement relative to the angular rotation of the second lever, through an intermediate stage wherein the aperture defined by said first and second diaphragm blades opens from the first predetermined opening degree to a second, larger predetermined opening degree; and c) relatively slowly at said first variable rate of displacement relative to the angular rotation of the second lever, through a final stage wherein the aperture defined by said first and second diaphragm blades changes from said second predetermined opening degree to a maximum opening degree.

Therefore, in the mechanisms according to the invention, when an aperture is small, a resolution of the F-number can be increased, which can enhance the AE control performance.

The present invention still further provides lens systems and lens apparatus incorporating drive mechanisms as specified above.

### BRIEF DESCRIPTION OF THE DRAWINGS

A better understanding of other objects, features and advantages of the present invention can be gained from a consideration of the following detailed description of an illustrative embodiment thereof, in conjunction with the figures of the accompanying drawings, in which:
FIG. 1 is a perspective view illustrating an embodiment of an iris drive mechanism according to the present invention in an exploded fashion;
FIG. 2 is a schematic diagram used to explain operation in the assembly of the iris drive mechanism according to the present invention;
FIG. 3 is a schematic diagram showing the condition such that the iris mechanism is assembled into a lens system; and
FIG. 4 is a graph used to explain the correlation between the rotational angle of a lever and the moving distance of a diaphragm.

### DETAILED DESCRIPTION OF THE PREFERRED EMBODIMENT

An iris drive mechanism according to a preferred embodiment of the present invention will hereinafter be described with reference to the drawings.

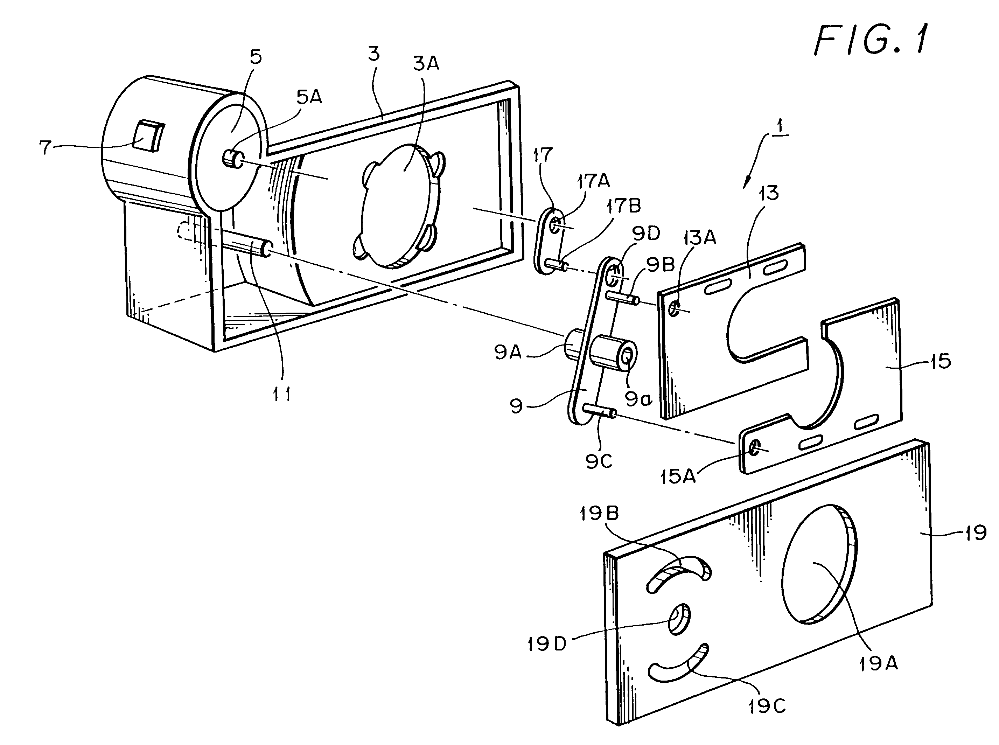

FIG. 1 of the accompanying drawings shows an overall arrangement of an iris drive mechanism 1 according to the present invention.

As shown in FIG. 1, the iris drive mechanism 1 comprises a frame 3 through which an aperture portion 3A for providing an optical path is formed and an IG meter 5 secured to the frame 3. A Hall element 7 is mounted on the IG meter 5. The Hall element 7 is used to detect the opening and/or closing amount of the iris.

The frame 3 has a support shaft 11 of a rod configuration projected thereon to which a first lever 9 is rotatably supported. In association with the support shaft 11, a cylindrical portion 9A into which the support shaft 11 is engaged with a pressure is formed on the first lever 9.

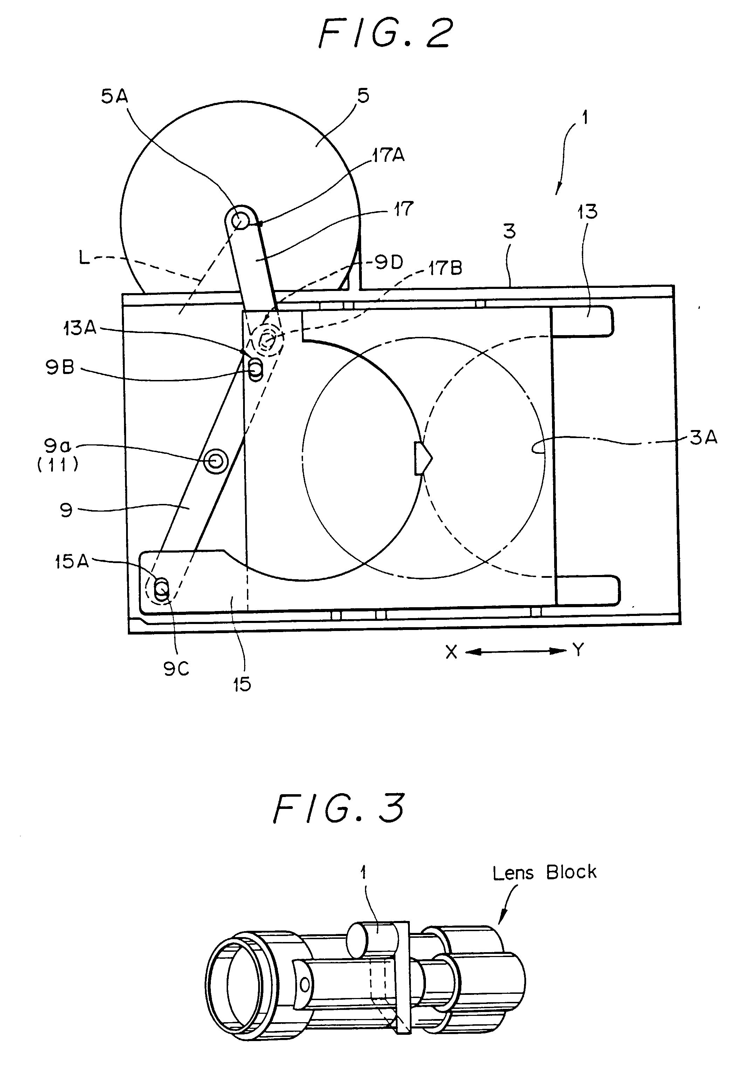

As will be understood from FIG. 2, the first lever 9 is shaped as a long plate, and engagement pins 9B, 9C which are respectively engaged with oblong holes 13A, 15A formed through two diaphragm blades 13, 15 which open and/or close the aperture portion 3A are projected on the first lever 9 in both sides of the cylindrical portion 9A in the longitudinal direction.

An oblong hole 9D is formed through the first lever 9 at its end portion at which the engagement pin 9B is formed. An engagement pin 17B, which is engaged with the oblong hole 9D, is projected on a second lever 17 of a long plate configuration.

A through-hole 17A into which an output shaft 5A of the IG meter 5 is engaged with a pressure is formed through the second lever 17.

A frame 19, which serves as a cover member, is attached to the frame 3. The frame 19 has formed therethrough a through-hole 19D to which a base side projection portion 9a of the cylindrical portion 9A is engaged, opening recesses 19B, 19C of arc configurations into which the engagement pins 9B, 9C are inserted so as to become movable about the shaft of the rotary shaft 11 and an aperture portion 19A corresponding to the aperture portion 3A.

As will be understood from FIG. 3, the iris drive mechanism 1 is assembled into a lens block at its predetermined position.

According to the above-mentioned arrangement, as shown in FIG. 2, when the IG meter 5 is driven, the second lever 17 is rotated and the rotational operation of the second lever 17 is transmitted through the engagement pin 17B and the oblong hole 9D to the first lever 9 (link mechanism).

Accordingly, the first lever 9 is rotated about the rotary shaft 11. Then, the rotation of the first lever 9 is transmitted to the one diaphragm blade 13 through the engagement pin 9B and the oblong hole 13A and also transmitted to the other diaphragm blade 15 through the engagement pin 9C and the oblong hole 15A with the result that the diaphragm blades 13, 15 are moved in the directions shown by arrows X and Y in FIG. 2.

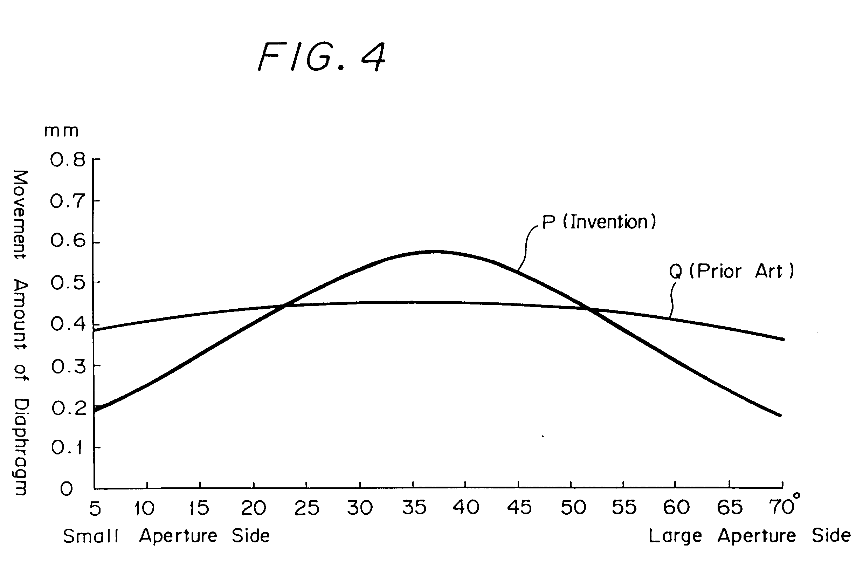

Thus, when the second lever 17 is located on the opposite to L side shown by a broken line in FIG. 2, even if the rotational angle of the second lever 17 is a constant angle, the moving amount of the diaphragm blades 13, 15 is small as shown by a curve P of FIG. 4. When the rotational angle of the second lever 17 is 5 degrees on the small aperture side, for example, the moving amount of the diaphragm blades 13, 15 becomes 0.2 mm, which is half of the amount (0.4 mm) of the conventional iris drive mechanism (see curve Q in FIG. 4).

The iris opening and/or closing amount detected by the Hall element 7 is converted from an angle into a voltage and then output. In this case, an output voltage becomes high as the angle is increased. According to this embodiment, even when the moving amount of the diaphragm blades 13, 15 is small, the rotational angle is increased and therefore the output voltage from the Hall element 7 is increased.

Therefore, the resolution of the iris opening and/or closing amount when the cutput voltage is converted in the form of analog to digital signal can be increased considerably.

As a consequence, the AE control performance at small apertures is enhanced and the opening and/or closing operation of the iris can be controlled satisfactorily.

As will be understood from the above-mentioned description, according to the iris drive mechanism of the present invention, the rotary shaft to which the first lever is rotatably supported is provided separately and the first lever is rotated by the IG meter via the second lever.

Since the first and second levers are linked by means of the oblong holes and engagement pins, the two diaphragm blades are opened and/or closed by the link mechanism.

Consequently, the moving distance of the diaphragm blades relative to the rotational angle of the IG meter is reduced and therefore, when the F number is relatively small, resolution of the F number is increased particularly at small apertures which can improve the AE control performance.

Furthermore, since the link mechanism is employed, a space of the lens can be effectively utilized even when the lens is miniaturized.

## Claims

1. An iris drive mechanism (1) having first and second diaphragm blades (13,15) which are slideable in first and second opposed directions (x, y) and define therebetween an aperture, and comprising:
a housing (3);
a first lever (9) which is pivottally supported on the housing (3) so as to be pivotal about a first axis (11) which passes through substantially the midpoint of said first lever;
first and second pins (9B,9C) which are mounted on said first lever proximate the first and second ends of said first lever, respectively, and at subtsantially equal distances from the first axis (11), said first and second pins being received in respective openings (13A,15A) formed in said first and second diaphragm blades;
an elongate opening (9D) formed in said first lever;
a motor (5) having a drive shaft (5A); and
a second lever (17) which is mounted on and rotates with said drive shaft (5A),
said second lever being relatively short compared with the first lever and having a third pin (17B) which is received in said elongate opening (9D) of said first lever;
characterised in that the elongate opening formed in said first lever is located between said first pin and said first end of the first lever so that, in use, the first and second levers co-operate to displace the first and second diaphragm blades:
a) relatively slowly at a first variable rate of displacement relative to the angular rotation of the second lever, through an initial stage wherein the aperture defined by said first and second diaphragm blades changes from a minimal opening degree to a first predetermined opening degree;
b) relatively quickly at a second variable rate of displacement relative to the angular rotation of the second lever, through an intermediate stage wherein the aperture defined by said first and second diaphragm blades opens from the first predetermined opening degree to a second, larger predetermined opening degree; and
c) relatively slowly at said first variable rate of displacement relative to the angular rotation of the second lever, through a final stage wherein the aperture defined by said first and second diaphragm blades changes from said second predetermined opening degree to a maximum opening degree.

2. The iris drive mechanism according to claim 1, wherein the first and second levers are arranged to be in line with each other at a time during said intermediate stage of displacement of the diaphragm blades and to be inclined relative to one another during said initial and final stages.

3. The iris drive mechanism according to claim 1 or 2, further comprising a Hall element (7) disposed on the motor (5) to detect rotation of the motor drive shaft (5A) and output a signal indicative of the opening and/or closing amount of the iris.

4. A lens system comprising an iris drive mechanism according to claim 1, 2 or 3.

5. A lens apparatus comprising the lens system of claim 4 and comprising means for detecting the brightness of an object image from an optical image formed by said lens system and for controlling the opening amount of the iris by controlling the motor (5).

## Patentansprüche

1. Eine Iris-Antriebsanordnung (1), die eine erste und eine zweite Diaphragmalamelle (13, 15) aufweist, die in einer ersten und einer zweiten entgegengesetzten Richtung (X, Y) verschiebbar sind, und dazwischen eine Öffnung bestimmen, mit:
einem Gehäuse (3);
einem ersten Hebel (9), der drehbar auf dem Gehäuse (3) getragen wird, um somit um eine erste Achse (11) drehbar zu sein, die im wesentlichen durch den Mittelpunkt des ersten Hebels geht,
einem ersten und einem zweiten Stift (9B, 9C), die jeweils auf dem ersten Hebel in der Nähe des ersten und des zweiten Endes des ersten Hebels und mit einem im wesentlichen gleichen Abstand von der ersten Achse (11) angeordnet sind, wobei der erste und der zweite Stift in jeweiligen Öffnungen (13A, 15A) aufgenommen werden, die in den ersten und zweiten Diaphragmalamellen ausgebildet sind,
einer länglichen Öffnung (9D), die auf dem ersten Hebel ausgebildet ist,
einem Motor (5), der eine Antriebswelle (5A) aufweist, und
einem zweiten Hebel (17), der auf der Antriebswelle (5A) befestigt ist und sich mit dieser dreht, wobei der zweite Hebel im Vergleich mit dem ersten Hebel verhältnismäßig kurz ist und einen dritten Stift (17B) aufweist, der in der länglichen Öffnung (9D) des ersten Hebels aufgenommen wird,
**dadurch gekennzeichnet**, daß die längliche Öffnung, die in dem ersten Hebel ausgebildet ist, zwischen dem ersten Stift und dem ersten Ende des ersten Hebels angeordnet ist, so daß im Gebrauch der erste und der zweite Hebel zusammenarbeiten, um die erste und die zweite Diaphragmalamelle zu versetzen:
a) verhältnismäßig langsam im Verhältnis zur Winkeldrehung des zweiten Hebels mit einer ersten veränderbaren Versetzungsrate, durch eine Anfangsstufe, bei der die Öffnung, die durch die erste und die zweite Diaphragrnalamelle bestimmt ist, sich von einem minimalen Öffnungsgrad zu einem ersten vorbestimmten Öffnungsgrad ändert;
b) verhältnismäßig schnell mit einer zweiten veränderbaren Versetzungsrate im Verhältnis zur Winkeldrehung des zweiten Hebels, durch eine Zwischen-Stufe, bei der die von der ersten und der zweiten Diaphragmalamelle bestimmten Öffnung sich vom ersten vorbestimmten Öffnungsgrad zu einem zweiten größeren vorbestimmten Öffnungsgrad öffnet; und
c) verhältnismäßig langsam mit der ersten veränderbaren Versetzungsrate im Verhältnis zur Winkeldrehung des zweiten Hebels, durch eine End-Stufe, in der die von der ersten und der zweiten Diaphragmalamelle bestimmte Öffnung sich von dem zweiten vorbestimmten Öffnungsgrad zu einem maximalen Öffnungsgrad ändert.

2. Iris-Antriebsanordnung nach Anspruch 1,
bei der der erste und der zweite Hebel angeordnet sind, um während der Zeit für die Zwischen-Stufe der Versetzung der Diaphragmalamellen miteinander in einer Linie zu sein, und um im Verhältnis zueinander während der Anfangs- und End-Stufen geneigt zu sein.

3. Iris-Antriebsanordnung nach Anspruch 1 oder 2,
die weiterhin ein Hall-Element (7) aufweist, das auf dem Motor (5) angeordnet ist, um die Drehung der Motor-Antriebswelle (5A) zu erfassen, und um ein Signal auszugeben, das das Öffnungs- und/oder Schließausmaß der Iris bezeichnet.

4. Linsensystem mit einer Iris-Antriebsanordnung nach Anspruch 1, 2 oder 3.

5. Linsengerät mit dem Linsensystem nach Anspruch 4,
und mit einer Einrichtung zum Erfassen der Helligkeit eines Gegenstandbildes von einem optischen Bild, das mittels dieses Linsensystems gebildet ist, und um das Öffnungsausmaß der Iris durch Steuern des Motors (5) zu steuern.

## Revendications

1. Mécanisme d'entraînement d'iris (1) ayant des première et deuxième lames de diaphragme (13, 15) qui peuvent coulisser dans des première et deuxième directions opposées (X, Y) et définissent entre elles une ouverture, et comportant :
un boîtier (3);
un premier levier (9) qui est supporté de façon pivotante sur le boîtier (3) de façon à pouvoir pivoter autour d'un premier axe (11) qui passe sensiblement à travers le point milieu dudit premier levier;
des premier et deuxième doigts (9B, 9C) qui sont montés sur ledit premier levier près des première et deuxième extrémités dudit premier levier respectivement et à des distances sensiblement égales du premier axe (11), lesdits premier et deuxième doigts étant reçus dans des ouvertures respectives (13A, 15A) formées dans lesdites première et deuxième lames de diaphragme;
une ouverture allongée (9D) formée dans ledit premier levier;
un moteur (5) ayant un arbre d'entraînement (5A); et
un deuxième levier (17) qui est monté sur et tourne avec ledit arbre d'entraînement (5A), ledit deuxième levier étant relativement court comparé au premier levier et ayant un troisième doigt (17B) qui est reçu dans ladite ouverture allongée (9D) dudit premier levier ;
caractérisé en ce que l'ouverture allongée formée dans ledit premier levier se trouve entre ledit premier doigt et ladite première extrémité du premier levier de telle sorte que, lors de l'utilisation, les premier et deuxième leviers coopèrent afin de déplacer les première et deuxième lames de diaphragme :
a) relativement lentement à une première vitesse variable de déplacement par rapport à la rotation angulaire du deuxième levier, en passant par un stade initial dans lequel l'ouverture définie par les première et deuxième lames de diaphragme change d'un degré d'ouverture minimale à un premier degré d'ouverture prédéterminée;
b) relativement rapidement à une deuxième vitesse variable de déplacement par rapport à la rotation angulaire du deuxième levier, en passant par un stade intermédiaire dans lequel l'ouverture définie par lesdites première et deuxième lames de diaphragme s'ouvre du premier degré d'ouverture prédéterminée vers un deuxième degré d'ouverture prédéterminée plus grand; et
c) relativement lentement à ladite première vitesse variable de déplacement par rapport à la rotation angulaire du deuxième levier, en passant par un stade final dans lequel l'ouverture définie par lesdites première et deuxième lames de diaphragme change dudit deuxième degré d'ouverture prédéterminée à un degré d'ouverture maximum.

2. Mécanisme d'entraînement d'iris selon la revendication 1, dans lequel les premier et deuxième leviers sont prévus pour être en ligne l'un avec l'autre au moment dudit stade intermédiaire de déplacement des lames de diaphragme et afin d'être inclinés l'un par rapport à l'autre pendant lesdits stades initial et final.

3. Mécanisme d'entraînement d'iris selon la revendication 1 ou 2, comportant en outre un élément à effet Hall (7) disposé sur le moteur (5) afin de détecter la rotation de l'arbre d'entraînement de moteur (5A) et délivrer un signal indicatif de la valeur d'ouverture et/ou de fermeture de l'iris.

4. Système de lentille comportant un mécanisme d'entraînement d'iris selon la revendication 1, 2 ou 3.

5. Objectif comportant le système de lentille de la revendication 4 et comportant des moyens destinés à détecter la luminosité d'une image d'objet à partir d'une image optique formée par ledit système de lentille et destinés à commander la valeur d'ouverture d'un iris en commandant le moteur (5).
